# FASCICULE DE BREVET EUROPEEN

(11) **EP 2 601 079 B1**
(45) Date de publication et mention de la délivrance du brevet: **27.08.2014**
(21) Numéro de dépôt: 11752257.3
(22) Date de dépôt: 20.07.2011
(51) Int. Cl.: B60R 13/01

(54) **BAC POUR COFFRE DE VEHICULE AUTOMOBILE OU ANALOGUE**
KOFFERRAUMWANNE EINES KRAFTFAHRZEUGS
MOTOR VEHICLE TRUNK LINER TRAY

(30) Priorité: 05.08.2010 FR 1003282
(43) Date de publication de la demande: 12.06.2013
(73) Titulaire: Novetud, F-77185 Lognes (FR)
(72) Inventeur: FERRERO, Jean-Michel, F-93220 Gagny (FR)
(74) Mandataire: Flavenot, Bernard
(86) Numéro de dépôt international: PCT/FR2011/000429
(87) Numéro de publication internationale: WO 2012/020181

(56) Documents cités:
- DE-A1-102007 041 147
- DE-B3- 10 249 284

## Description

La présente invention concerne les bacs pour coffres de véhicules automobiles ou analogues, c'est-à-dire les bacs destinés à recouvrir la paroi de fond et la paroi latérale des coffres de véhicules automobiles ou analogues, en vue de les protéger contre les chocs, les liquides agressifs, salissants, graisseux ou analogues qui pourraient s'écouler lors de transport de certains produits, objets, comme des outils ou analogues, etc., que ces transports aient lieu à titre privé ou commercial. Mais ces bacs peuvent aussi être prévus, non pas pour protéger les parois du coffre, mais les objets eux-mêmes susceptibles d'entrer en contact avec certaines aspérités ou analogues de ces parois. Tel est le cas des valises, sacoches et autres objets de ce type fragiles en eux-mêmes.

En effet, lorsqu'un véhicule est livré à son propriétaire, la tôle du coffre est, soit nue c'est-à-dire sans aucune autre protection que la peinture et/ou un traitement antirouille, ce qui est généralement le cas pour les véhicules de transport commerciaux, camionnettes ou analogues, soit recouverte d'un tapis qui se révèle ne pas être d'une grande résistance et/ou non étanche. En aucun cas, ces moyens sont suffisants pour une réelle protection des parois du coffre.

Aussi, a-t-il été prévu des bacs se présentant généralement sous forme d'un plateau dont les dimensions et la forme des parois sont semblables à celles des coffres pour qu'ils puissent s'y intégrer le plus étroitement possible.

Le propriétaire d'un véhicule automobile peut, en option, acquérir un tel type de bac de protection adapté au coffre du véhicule, soit directement auprès du constructeur du véhicule soit chez un revendeur spécialisé.

De plus, quand un propriétaire veut acquérir une protection de coffre, il doit définir le type de protection qui lui est nécessaire : ou bien un tapis présentant un aspect esthétique avec une surface de réception douce pour les objets fragiles, comme des valises, mallettes, sacs ou analogues, entreposés dans le coffre et plus particulièrement destiné à protéger ces objets à l'encontre des aspérités en saillie pouvant être présentes sur la carrosserie du coffre, ou bien un bac à la fois amortisseur de chocs et pour protéger les parois du coffre contre les liquides agressifs, salissants, graisseux ou analogues, par exemple comme ceux contenus dans des pots de peinture, de produits chimiques, etc.

Dans la plupart des cas, comme il ne peut pas réellement savoir à l'avance quel type de produits, objets, etc. qu'il sera amené à transporter, le propriétaire du véhicule se procure les deux types possibles de protection, soit du type tapis, soit du type bac, ce qui grève d'autant son budget.

De plus, afin d'être constamment en mesure d'utiliser l'un ou l'autre de ces deux types de protection, il est obligé de les positionner dans le coffre de son véhicule, par exemple l'un sur l'autre, ou l'un dans l'autre si cela est possible, ce qui peut diminuer le volume utile du coffre en l'encombrant quand il renferme des objets et autres produits.

Pour pallier cet inconvénient, il a été notamment réalisé un bac réversible comme celui qui est décrit dans le DE 102 49 284 Ce document divulgue un bac d'après le préambule de la revendication 1. Cependant, cette réalisation ne répond pas aux souhaits des utilisateurs, notamment sur le plan de l'étanchéité et de la facilité pour le faire passer d'une configuration à l'autre par réversibilité.

Aussi, la présente invention a-t-elle pour but de réaliser un bac pour coffre de véhicule automobile ou analogue, qui pallie en grande partie les inconvénients mentionnés ci-dessus des bacs de protection connus à ce jour.

Plus précisément, la présente invention a pour objet un bac pour coffre de véhicule automobile ou analogue, selon la revendication 1 annexée.

D'autres caractéristiques et avantages de la présente invention apparaîtront au cours de la description suivante donnée en regard des dessins annexés à titre illustratif mais nullement limitatif, dans lesquels :
La figure 1 est une vue de dessus schématique d'un mode de réalisation préféré du bac selon l'invention,
Les figures 2 et 3 sont des coupes partielles référencées A-A; B-B; C-C; D-D et E-E sur les figures 1 et 6, illustrant les deux configurations possibles du bac avec une face moquette et une face plastique étanche, les représentations en partie gauche des deux figures 2 et 3 représentant la configuration du bac avec un fond moquette et les représentations en partie droite représentant la configuration du bac avec un fond plastique,
La figure 4 est une vue, à plus grande échelle des deux parties identiques encerclées E1 sur les deux figures 2 et 3,
La figure 5 est une vue, à plus grande échelle, de la partie encadrée E2 sur la figure 4, avec un séparateur Ent en coopération avec le fond moquette, et
La figure 6 est une vue, à plus grande échelle, de la partie encadrée en traits-points référencée E3 sur la figure 1, permettant de faire ressortir des caractéristiques structurelles du bac selon l'invention.

Il est précisé que les figures représentent essentiellement un seul mode de réalisation de l'objet selon l'invention, mais qu'il peut exister d'autres modes de réalisation qui répondent à la définition de cette invention.

En référence aux figures annexées, la présente invention concerne un bac pour coffre de véhicule automobile.

Ce bac Ba comporte une paroi de fond 10 de forme polygonale, un rebord 20 et des moyens 30 pour monter ce rebord 20 en coopération avec le bord 12 de la paroi de fond 10 pour former un récipient en forme de plateau ou analogue.

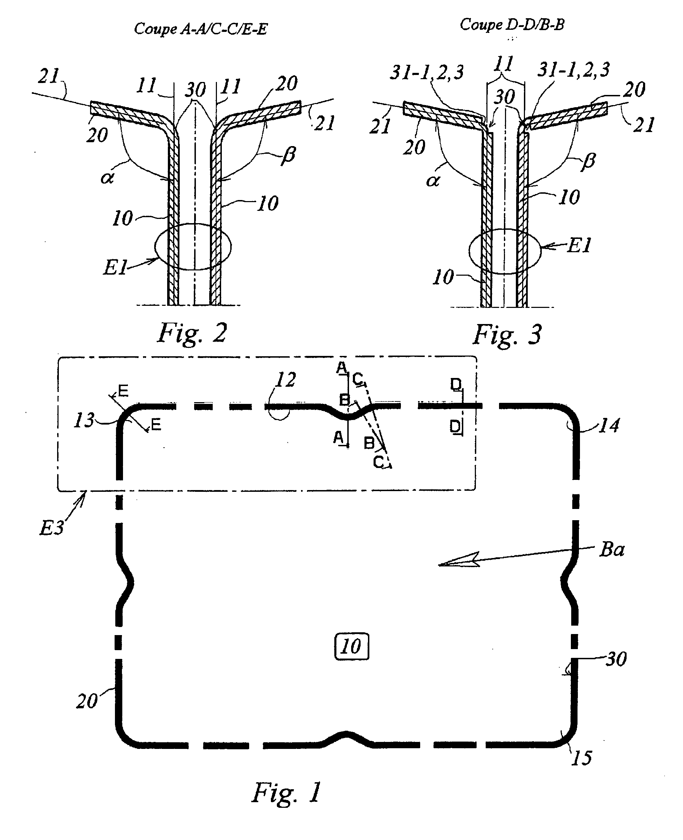

Selon une caractéristique de l'invention, les moyens 30 pour monter le rebord 20 en coopération avec le bord de la paroi de fond sont constitués par des moyens de charnière 31 reliant le bord 12 de la paroi de fond 10 et un bord du rebord 20, ces moyens de charnière étant agencés de façon que le rebord 20 soit apte, par pivotement grâce aux moyens de charnière 31, à prendre deux positions stables, figures 2 et 3, ces deux positions stables étant définies de part et d'autre du plan 11 de la paroi de fond 10 et de façon que le plan 21 du rebord 20 fasse, avec le plan 11 de la paroi de fond 10, respectivement deux angles α, β non nuls.

Selon une réalisation préférentielle, ces deux angles α, β non nuls sont sensiblement égaux et légèrement supérieurs à quatre-vingt-dix degrés, figures 2, 3.

Comformément à l'invention, la paroi de fond 10 et le rebord 20 sont formés d'une seule pièce dans une plaque de matière plastique 40, par exemple un mélange de polypropylène et d'EVA avec éventuellement des additifs de renfort, par exemple par la technique bien connue en elle-même sous la terminologie "thermo-plastique".

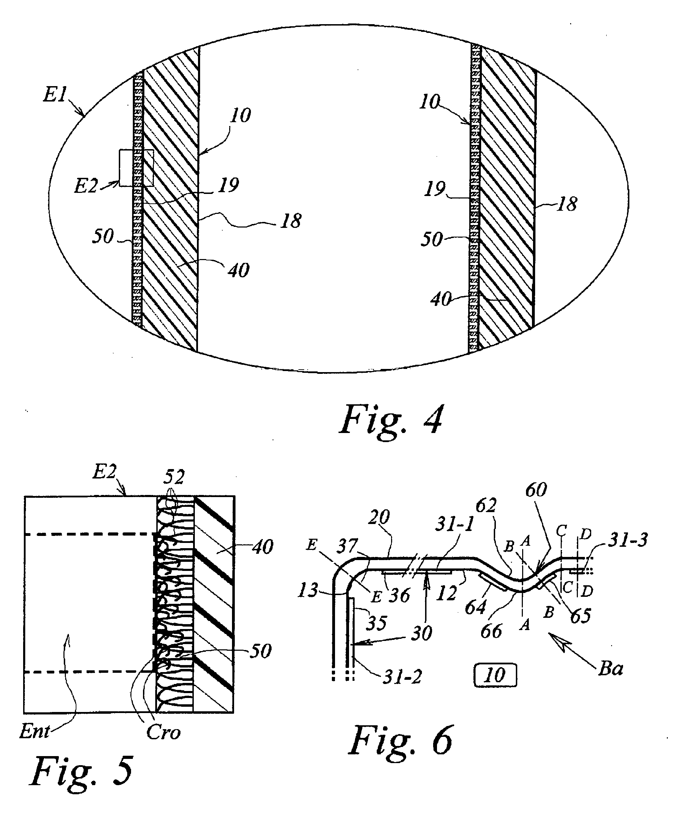

Les moyens de charnière 31 sont constitués par des rainures en creux 31-1, 31-2, 31-3, ..., figures 3 et 6, réalisées dans l'épaisseur de la plaque de matière plastique 40 afin d'obtenir, de façon connue en soit, un affaiblissement de la plaque à cet endroit, sans pour autant la rendre non étanche. Ces rainures en creux sont séparées par des parties non-amincies, figure 6.

Il est précisé que cette plaque de matière plastique 40 est déterminée de façon que, de préférence, elle soit en outre relativement souple, par exemple pour pouvoir être déformée, optionnellement même être enroulée sur elle-même, sans trop de difficultés.

De façon tout à fait avantageuse, le bac selon l'invention comporte, figures 4 et 5, une couche de moquette 50 recouvrant l'une 19 des deux faces de la plaque de matière plastique 40. De façon préférentielle, dans un but qui sera explicité ci-après, la couche de moquette 50 comporte, au moins en surface, des boucles 52.

Il est précisé que, au sens de la présente description, le terme "moquette" désigne tout produit formé d'une étoffe tissée ou non, tricoté ou non, à trame et/ou chaîne, réalisé avec des fils de toute matière comme de la laine, du coton, des matières synthétiques ou analogues, ces fils étant positionnés sur un support de base ou non.

Cette couche de moquette 50 est intégrée, par exemple par fusion-collage, en surface à la plaque de matière plastique 40, par exemple lors de la mise en oeuvre du procédé de fabrication du bac notamment par la technique connue sous la terminologie "extrusion".

Selon une caractéristique de l'invention, comme représenté sur la figure 1 qui représente, à titre d'exemple, une paroi de fond 10 de forme sensiblement rectangulaire, pour rigidifier le bac au moins au niveau du rebord 20, les sommets de la forme polygonale de la paroi de fond 10 constituent des coins convexes 13, 14, 15, ... de la paroi de fond, les parties du bord 12 de la paroi de fond reliant ces coins, deux par deux, étant sensiblement rectilignes.

Comme illustré sur la figure 6, les moyens de charnière 31 situés au niveau d'un coin convexe 13 comporte au moins deux rainures en creux 35, 36 séparées par une première portion non-amincie 37 de la paroi de fond 10, cette première portion non-amincie 37 étant sensiblement centrée sur le sommet du coin convexe 13 (coupe E-E).

De même, pour rigidifier le rebord 20 quand il est d'une relativement grande longueur entre deux coins convexes consécutifs 13, 14, le bac comporte, sur le bord 12 de la paroi de fond, au moins une discontinuité 60.

Cette discontinuité peut être, soit concave soit convexe. Cependant, de façon tout à fait préférentielle, pour permettre au bac d'occuper la plus grande place possible du coffre du véhicule, cette discontinuité 60 est constituée, comme illustré sur les figures 1 et 6, d'une découpe concave 62 de la paroi de fond 10.

Dans ce dernier cas, il est aussi très avantageux que les moyens de charnière 31 situés au niveau de la découpe concave 62, figure 6, comportent au moins deux rainures en creux 64, 65 (coupe B-B) séparées par une seconde portion non-amincie 66 de la paroi de fond 10 (coupe A-A), cette seconde portion non-amincie 66 étant avantageusement sensiblement centrée sur le fond de la découpe concave 62.

Le bac Ba dont un mode de réalisation est décrit ci-dessus s'utilise de la façon suivante :

Il est par exemple supposé qu'un propriétaire de véhicule ayant un coffre à protéger possède un bac Ba comme celui qui est décrit ci-dessus et qui a une forme qui est parfaitement adaptée à la forme en creux du coffre de son véhicule à protéger.

S'il veut transporter des produits, objets, etc. qui peuvent déverser des liquides agressifs, salissants, graisseux ou analogues, il va adapter la configuration du bac Ba, en faisant subir au rebord 20 une rotation autour des moyens de charnière 31, essentiellement grâce aux rainures 31-1, 31-2, 31-3, ... et à la relative souplesse de la plaque de matière plastique 40, de façon qu'il prenne la configuration comme celle qui est illustrée sur la partie droite des figures 2 et 3, c'est-à-dire de façon que le fond du bac sur lequel reposeront ces produits ou objets soit constitué par la face 18 de la plaque de matière plastique 40, amortisseuse et étanche, ne portant pas la couche de moquette 50.

Lorsque le bac est ainsi placé dans le coffre du véhicule, son rebord 20 se positionne sur la paroi latérale du coffre et reste sensiblement vertical sans s'affaisser, grâce notamment aux découpes concaves 62 des discontinuités 60 décrites ci-avant. De plus, comme les angles α et β sont choisis avantageusement légèrement supérieurs à quatre-vingt-dix degrés, le rebord 20 s'applique sur la paroi latérale du coffre, sous l'effet de la force élastique engendrée par la déformation de la plaque de matière plastique 40 au niveau des moyens de charnières 31 constitués par les rainures 31-1, 31-2, 31-3, ... et les parties non-amincies 37, 66, figures 3 et 6, ou d'autres parties non-amincies situées entre les rainures, comme celles illustrées sur la figure 6, respectivement à gauche et à droite des rainures 64 et 65.

Si, en revanche, l'utilisateur veut un bac dont le fond est recouvert de la couche de moquette 50, il agit comme explicité ci-dessus, mais pour donner au bac la configuration illustrée sur la partie gauche des figures 2 et 3, et place le bac dans le coffre de la même façon que décrit ci-dessus.

A cet effet, il est à noter que, lors de la rotation du rebord 20 pour donner au bac l'une ou l'autre de ses deux configurations illustrées sur les figures 2 et 3, la relative rigidité qui existe entre la portion de rebord se trouvant au niveau des coins et la portion de la paroi de fond 10 bordant ces coins, qui est obtenue grâce à la partie non-amincie (par exemple 37, figure 6), les coins vont eux-mêmes favoriser, par effet d'entraînement, la rotation de tout le rebord et donner presque automatiquement au bac l'une ou l'autre des deux configurations possibles.

En outre, si la couche de moquette 50 comporte des boucles 52, il peut utiliser des séparateurs Ent, comme des entretoises, pour compartimenter le coffre et ainsi éviter aux objets placés dans les compartiments, de glisser et de se cogner entre eux. Ces séparateurs, en forme de pattes ou plaquettes, comportent, sur une de leurs tranches, des agrafes-crochets ou analogues Cro, figure 5, pour, à la façon des systèmes d'accrochages connus sous la Marque de commerce "VELCRO", solidariser de façon amovible une tranche des séparateurs avec la couche de moquette 50.

## Revendications

1. Bac (Ba) pour coffre de véhicule automobile comportant une paroi de fond (10) de forme polygonale un rebord (20), ladite paroi de fond (10) et ledit rebord (20) étant formés d'une seule pièce dans une plaque de matière plastique (40), les sommets de la forme polygonale de la paroi de fond (10) constituant des coins convexes (13, 14, 15, ...) de ladite paroi de fond, les parties du bord (12) de ladite paroi de fond reliant ces coins deux par deux étant sensiblement rectilignes, et des moyens (30) pour monter ledit rebord (20) en coopération avec le bord (12) de la paroi de fond (10) constitués par des moyens de charnière (31) reliant le bord (12) de la paroi de fond (10) et un bord du dit rebord (20), lesdits moyens de charnière (31) comportant au moins des rainures en creux (31-1, 31-2, 31-3, ...) réalisées dans ladite plaque de matière plastique (40) et étant agencés de façon que ledit rebord (20) soit apte, par pivotement, à prendre deux positions stables, ces deux positions stables étant définies de part et d'autre du plan (11) de ladite paroi de fond (10) et de façon que le plan (21) du dit rebord (20) fasse, avec ledit plan (11) de la paroi de fond (10), respectivement deux angles (α, β) non nuls, **caractérisé par le fait que** lesdits moyens de charnière situés au niveau d'un coin convexe (13) comporte au moins deux rainures en creux (35, 36) séparées par une première portion non-amincie (37) de la paroi de fond (10), cette première portion non-amincie (37) étant sensiblement centrée sur le sommet du dit coin convexe (13).

2. Bac selon la revendication 1, **caractérisé par le fait que**, entre au moins deux coins convexes consécutifs (13, 14), le bord (12) de ladite paroi de fond comporte au moins une discontinuité (60).

3. Bac selon la revendication 2, **caractérisé par le fait que** ladite discontinuité (60) est constituée d'une découpe concave (62) de ladite paroi de fond (10).

4. Bac selon la revendication 3, **caractérisé par le fait que** les moyens de charnière (31) situés au niveau d'une découpe concave (62) comportent au moins deux rainures en creux (64, 65) séparées par une seconde portion non-amincie (66) de la paroi de fond (10), cette dite seconde portion non-amincie (66) étant sensiblement centrée sur le fond de ladite découpe concave (62).

5. Bac selon l'une des revendications 2 à 4, **caractérisé par le fait qu'**il comporte en outre une couche de moquette (50) recouvrant l'une (19) des deux faces de ladite plaque de matière plastique (40).

6. Bac selon la revendication 5, **caractérisé par le fait que** ladite couche de moquette (50) comporte des boucles (52).

7. Bac selon l'une des revendications précédentes, **caractérisé par le fait que** lesdits deux angles (α, β) non nuls sont sensiblement égaux et légèrement supérieurs à quatre-vingt-dix degrés.

8. Bac selon l'une des revendications précédentes, **caractérisé par le fait que** ladite plaque de matière plastique (40) est déterminée de façon qu'elle soit relativement souple pour pouvoir être déformée, optionnellement être enroulée sur elle-même.

## Patentansprüche

1. Kofferraum-Wanne (Ba) für ein Kraftfahrzeug, umfassend eine Bodenwand (10) mit einer polygonalen Form, eine Aufkantung (20), wobei die Bodenwand (10) und die Aufkantung (20) einteilig aus einer Platte (40) aus Kunststoffmaterial ausgebildet sind, wobei die Eckpunkte der polygonalen Form der Bodenwand (10) konvexe Ecken (13, 14, 15, ...) der Bodenwand ausbilden, wobei die Abschnitte des Randes (12) der Bodenwand (10), die jeweils zwei Ecken miteinander verbinden, in etwa geradlinig ausgebildet sind, und Mittel (30) zum Aufstellen der Aufkantung (20) in Zusammenwirkung mit dem Rand (12) der Bodenwand (10), die durch Scharniermittel (31) gebildet sind, die den Rand (12) der Bodenwand (10) und einen Rand der Aufkantung (20) verbinden, wobei die Scharniermittel (31) zumindest vertiefte Nuten (31-1, 31-2, 31-3, ...) umfassen, die in der Platte aus Kunststoffmaterial (40) ausgebildet und so angeordnet sind, dass die Aufkantung (20) geeignet ist, um, durch Verschwenkung, zwei stabile Positionen einzunehmen, wobei diese beiden stabilen Positionen auf beiden Seiten der Ebene (11) der Bodenwand (10) definiert sind, und zwar jeweils so, dass die Ebene (21) der Aufkantung (20) mit der Ebene (11) der Bodenwand (10) zwei von Null verschiedene Winkel (α, β) bildet,
**dadurch gekennzeichnet,**
**dass** die Scharniermittel (31), die sich auf Höhe einer konvexen Ecke (13) befinden, wenigstens zwei vertiefte Nuten (35, 36) umfassen, die durch einen ersten, nicht-verjüngten Abschnitt (37) der Bodenwand (10) voneinander getrennt sind, wobei dieser erste, nicht-verjüngte Abschnitt (37) in etwa um den Eckpunkt der konvexen Ecke (13) zentriert ist.

2. Wanne nach Anspruch 1, **dadurch gekennzeichnet, dass** zwischen wenigstens zwei aufeinanderfolgenden konvexen Ecken (13, 14) der Rand (12) der Bodenwand wenigstens eine Unterbrechung (60) aufweist.

3. Wanne nach Anspruch 2, **dadurch gekennzeichnet, dass** die Unterbrechung (60) von einem konkaven Ausschnitt (62) der Bodenwand (10) gebildet ist.

4. Wanne nach Anspruch 3, **dadurch gekennzeichnet, dass** die Scharniermittel (31), die auf Höhe eines konkaven Ausschnitts (62) angeordnet sind, zumindest zwei vertiefte Nuten (64, 65) umfassen, die durch einen zweiten, nicht-verjüngten Abschnitt (66) der Bodenwand (10) voneinander getrennt sind, wobei der zweite nicht-verjüngte Abschnitt (66) etwa um den tiefsten Teil des konkaven Ausschnitts (62) zentriert ist.

5. Wanne nach einem der Ansprüche 2 bis 4, **dadurch gekennzeichnet, dass** sie zusätzlich eine Teppichschicht (50) umfasst, die die eine (19) der beiden Seiten der Platte (40) aus Kunststoffmaterial überdeckt.

6. Wanne nach Anspruch 5, **dadurch gekennzeichnet, dass** die Teppichschicht (50) Schlaufen (52) umfasst.

7. Wanne nach einem der vorhergehenden Ansprüche, **dadurch gekennzeichnet, dass** die beiden von Null verschiedenen Winkel (α, β) in etwa gleich groß sind und etwas mehr als neunzig Grad betragen.

8. Wanne nach einem der der vorhergehenden Ansprüche, **dadurch gekennzeichnet, dass** die Platte (40) aus Kunststoffmaterial in der Weise ausgebildet ist, dass sie relativ nachgiebig ist, um verformt werden zu können und auf Wunsch um sich selbst aufgerollt werden zu können.

## Claims

1. A bin (Ba) for a motor vehicle trunk, the bin comprising a bottom wall (10) of polygonal shape with a rim (20), said bottom wall (10) and said rim (20) being formed as a single piece from a plate of plastics material (40), the vertices of the polygonal shape of the bottom wall (10) constituting convex corners (13, 14, 15,...) of said bottom wall, the portions of the edge (12) of said bottom wall that interconnect these corners in pairs being substantially rectilinear, and means (30) for mounting said rim (20) in cooperation with the edge (12) of the bottom wall (10), which means are constituted by hinge means (31) connecting the edge (12) of the bottom wall (10) with an edge of said rim (20), said hinge means (31) including at least recessed grooves (31-1, 31-2, 31-3,...) made in said plate of plastics material (40) and being arranged in such a manner that said rim (20) is suitable, on pivoting, for taking up two stable positions, these two stable positions being defined on either side of the plane (11) of said bottom wall (10) and in such a manner that the plane (21) of said rim (20) forms two respective non-zero angles (α,β) with said plane (11) of the bottom wall (10); the bin being **characterized by** the fact that said hinge means situated at a convex corner (13) include at least two recessed grooves (35, 36) spaced apart by a first non-thinned portion (37) of the bottom wall (10), this first non-thinned portion (37) being centered substantially on the vertex of said convex corner (13).

2. A bin according to claim 1, **characterized by** the fact that between at least two consecutive convex corners (13, 14), the edge (12) of said bottom wall includes at least one discontinuity (60).

3. A bin according to claim 2, **characterized by** the fact that said discontinuity (60) is constituted by a concave cutout (62) in said bottom wall (10).

4. A bin according to claim 3, **characterized by** the fact that the hinge means (31) situated at a concave cutout (62) include at least two recessed grooves (64, 65) spaced apart by a second non-thinned portion (66) of the bottom wall (10), this said second non-thinned portion (66) being centered substantially on the bottom of said concave cutout (62).

5. A bin according to any one of claims 2 to 4, **characterized by** the fact that it further includes a layer of carpet (50) covering one of the two faces (19) of said plate of plastics material (40).

6. A bin according to claim 5, **characterized by** the fact that said layer of carpet (50) includes loops (52).

7. A bin according to any preceding claim, **characterized by** the fact that said two non-zero angles (α, β) are substantially equal and slightly greater than ninety degrees.

8. A bin according to any preceding claim, **characterized by** the fact that said plate of plastics material (40) is designed in such a manner as to be relatively flexible so as to be capable of being deformed, and optionally of being rolled up.
